(19) Europäisches Patentamt
European Patent Office
Office européen des brevets

(11) **EP 3 781 982 B1**

(12) **EUROPEAN PATENT SPECIFICATION**

(45) Date of publication and mention
of the grant of the patent:
**05.06.2024 Bulletin 2024/23**

(21) Application number: **19728116.5**

(22) Date of filing: **19.04.2019**

(51) International Patent Classification (IPC):
**G02F 1/01** *(2006.01)* **G01N 21/63** *(2006.01)*

(52) Cooperative Patent Classification (CPC):
**G02F 1/01; G01N 21/7746; G02F 1/21;**
G01N 21/648; G02B 6/29341; G02F 2203/15

(86) International application number:
**PCT/IB2019/053254**

(87) International publication number:
**WO 2019/202560 (24.10.2019 Gazette 2019/43)**

(54) **WGM MICRORESONATOR**

WGM-MIKRORESONATOR

MICRORÉSONATEUR WGM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2018 PL 42528518**

(43) Date of publication of application:
**24.02.2021 Bulletin 2021/08**

(73) Proprietors:
• **Uniwersytet Warszawski
00-927 Warszawa (PL)**
• **Instytut Technologii Materialów Elektronicznych
01-919 Warszawa (PL)**

(72) Inventors:
• **PAWLAK, Dorota Anna
01-815 Warszawa (PL)**
• **PASZKE, Piotr
64-361 Miedzichowo (PL)**
• **NOWACZYNSKI, Rafa
05-260 Marki (PL)**
• **KLOS, Andrzej
00-019 Warszawa (PL)**
• **OSEWSKI, Pawe
16-400 Suwalki (PL)**
• **GAJC, Marcin
03-316 Warszawa (PL)**

(74) Representative: **AOMB Polska Sp. z.o.o.
ul. Rondo Ignacego Daszynskiego 1
00-843 Warsaw (PL)**

(56) References cited:
• **RAFAL NOWACZYNSKI ET AL: "Fabrication of
glass microspheres doped with metallic
nanoparticles and quantum dots for Whispering
Gallery Mode resonators", MOLECULAR
PLASMONICS 2017, 18 May 2017 (2017-05-18),
XP55612482,**
• **TRONG HUYNH-BUU NGO ET AL: "Whispering
gallery modes in hybrid Au-ZnO microsphere
resonators: experimental and theoretical
investigations", OPTICAL MATERIALS
EXPRESS, vol. 7, no. 8, 24 July 2017 (2017-07-24),
page 2962, XP55612647, DOI:
10.1364/OME.7.002962**
• **MARCIN GAJC ET AL: "Nanoparticle Direct
Doping: Novel Method for Manufacturing
Three-Dimensional Bulk Plasmonic
Nanocomposites", ADVANCED FUNCTIONAL
MATERIALS, vol. 23, no. 27, 19 July 2013
(2013-07-19) , pages 3443-3451, XP55612610, DE
ISSN: 1616-301X, DOI: 10.1002/adfm.201203116
cited in the application**

**(Cont. next page)**

• PANG SHUO ET AL: "Quantum dot-embedded microspheres for remote refractive index sensing", APPLIED PHYSICS LETTERS, A I P PUBLISHING LLC, US, vol. 92, no. 22, 3 June 2008 (2008-06-03), pages 221108-221108, XP012107305, ISSN: 0003-6951, DOI: 10.1063/1.2937209 cited in the application

## Description

The invention relates to a WGM microresonator, applicable in sensing to the detection of physical or biological properties or as filters in optical fibre lines.

WGM waves or modes, a term derived as an abbreviation of "Whispering Gallery Modes"-i.e., grazing-incidence oblique modes, are a specific type of wave field resonance, for example acoustic or electromagnetic, inside a resonator cavity. As a result of total internal reflection, the wave propagates at the surface of the resonator. The resonance occurs for such wavelengths for which the optical path in one cycle is an integer multiple of the wavelength. In this case, constructive interference occurs. The resonant frequency depends on the geometry of the cavity, as well as on the dielectric constant of the medium in which the wave propagates and the dielectric constant of the surrounding. The resonator efficiency, the resonance line width and the intensity of the resonant modes inside the WGM cavity is described by the microresonator quality factor - the Q-factor. It is the ratio of the energy stored in the microresonator to the energy dissipated in one optical cycle and is given by the following formula:

$$Q = \omega_r \frac{W}{P_d} = \frac{\omega_r}{\Delta\omega_{FWHM}}$$

where: $\omega_r$ - the resonance frequency, W- the energy stored in the resonator, $P_d$ - the energy dissipated in one cycle, $\Delta\omega_{FWHM}$- the half width of the resonance peak.

The WGM resonance modes can be generated in differently shaped resonators: spherical, toroidal, cylindrical, disc or ring shaped ones.

Electromagnetic WGM microresonators are characterised by a large value of the Q-factor, narrow resonance lines, large density of accumulated energy, multi-mode generation of resonance frequencies, as well as a small size. The electromagnetic WGM microresonators are widely used in practice, as reported by A. B. Matsko, V. S. Ilchenko, IEEE J. Sel. Top. Quant. Electron., 12 (2006) 15-32. The application possibilities include interferometry, spectroscopy, data storage devices, filters in optical fibre lines.

A. M. Armani et al., Science, 317 (2007) 783-787 present also a wide range of their possible applications related to the technology of pressure sensors, temperature sensors, and sensors of other mechanical parameters, as well as biosensors, as the WGM resonators allow the analyte detection even at the single molecule level.

G. Lin. et al., Micro-Optics, 2010, 771622, doi:10.1117/12.853915, report the use of WGM resonators in laser technology, because they have a very low threshold for initiation of the laser action. The small size allow for easy integration and connection of many resonators within one fibre and, consequently, obtaining a tuneable laser.

The dielectric materials used to produce WGM resonators are often inorganic glasses, as they are transparent in the visible and infrared spectral ranges, allow doping with different methods, are resistant to thermal deformation in the range up to the softening temperature.

Rare earth ion-doped microresonators were reported by A. Rasoloniaina et al., Sci. Rep., 4 (2014) 4023, doi:10.1038/srep04319.

Organic dye-doped microresonators were reported by J. Yang, L. J. Guo, IEEE J. Sel. Top. Quant. Electron., 12 (2006) 143-147.

CdSe/ZnS quantum dot-embedded microresonators were reported by S. Pang, R. E. Beckham, K. E. Meissner, Appl. Phys. Lett., 92(22) (2008) 221108, doi: 10.1063/1.2937209.

Finally, R Nowaczynski et al.: "Fabrication of glass microspheres doped with metallic nanoparticles and quantum dots for Whispering Gallery Mode resonators" Molecular Plasmonics 2017, 18 May 2017 disclose a WGM microresonator (microspheres) comprising a dielectric matrix (Glass), characterised in that in the dielectric matrix with positive real part of the electric permittivity $Re(\varepsilon)>0$ in the UV/VIS/NIR wavelength range of electromagnetic radiation and with low dielectric losses it comprises at least one type of plasmonic nanoparticles (silver) with negative real part of the electric permittivity $Re(\varepsilon)<0$ in the UV/VIS/NIR wavelength range of electromagnetic radiation or at least one type of luminescent semiconductor (CdTe QD). However it is silent silent with respect to diameters of plasmonic nanoparticles or diameters of quantum dots. Nor does it disclose combination of at least one type of plasmonic nanoparticles and at least one type of luminescent semiconductor or perovskite quantum dots, let alone such combination's unexpected technical effected disclosed in the present application.

The purpose of the present invention is to enhance the intensity of the resonance modes in a WGM resonator, while simultaneously narrowing the width of the resonance peak, and thus to increase the value of the Q-factor.

A WGM microresonator according to the invention is characterized in that in a dielectric matrix with positive real part of the electric permittivity $Re(\varepsilon)>0$ in the UV/VIS/NIR wavelength range of electromagnetic radiation it comprises at least one type of plasmonic nanoparticles with negative real part of the electric permittivity $Re(\varepsilon)<0$ and at least one type of luminescent semiconductor or perovskite quantum dots, wherein the plasmonic nanoparticles have diameter of 10 to 50 nm, and wherein diameter of quantum dots is from 1 to 15 nm.

As a dielectric matrix it preferably comprises a low-melting inorganic glass, most preferably a phosphate glass, and especially a glass with a formula $Na_3Al_2P_3O_{12}$, in short NAP, or a glass with a formula $Na_5B_2P_3O_{13}$, in short NBP, or a tellurium glass with composition: 80mol%$TeO_2$-10mol%$ZnO$-10mol%$Na_2CO_3$, in short

TZN.

As plasmonic nanoparticles in the matrix it preferably comprises metal or semiconductor nanoparticles with low optical losses, i.e. with imaginary part of the electrical permittivity Im($\varepsilon$)<30 F/m, and with melting temperature higher than the melting point of the matrix, most preferably silver nanoparticles.

As quantum dots in the matrix it preferably comprises quantum dots of semiconductor material: CdTe or CdSe/ZnS. The diameter of the semiconductor quantum dots ranges preferably from 1 to 6 nm.

A WGM microresonator according to the invention preferably comprises in the dielectric matrix 0.2 - 0.6 wt% quantum dots and 0.1 - 1 wt% metal nanoparticles. The WGM microresonator is preferably spherical in shape, and the diameter of microspheres is 1 - 300 $\mu$m.

A microresonator according to the invention is an active microresonator, in which internal amplification of the electromagnetic wave takes place, with simultaneous narrowing of the resonance peak width, which results in an increase of the Q-factor. The internal gain compensates for the losses resulting from the absorption of radiation. The amplification and the narrowing of the resonance peak are obtained by doping the dielectric matrix with nanoparticles with plasmonic properties and quantum dots. Metal or semiconductor nanoparticles with negative real part of the electric permittivity - Re($\varepsilon$)<0 located in a dielectric environment with positive real part of the electric permittivity Re($\varepsilon$)>0 show plasmonic properties. Under the influence of interaction with the electromagnetic wave, for a strictly defined frequency, dependent on the type and size of the nanoparticles, as well as their electric permittivities and the dielectric matrix, the wave field is coupled to the oscillations of the electron plasma in the nanoparticles. This results in amplification of the electromagnetic field with a frequency equal to the electron plasma frequency at the metal/semiconductor-dielectric interface. In turn, the interaction of the field induced by the plasmonic nanoparticles with the quantum dots results in enhanced quantum dot emission, shortening of the excited state lifetime and narrowing of the peak width of the quantum dot emission, which results in an increase in the Q-factor.

The frequency of the emission line from the quantum dots depends primarily on the chemical composition and the diameter of the dots. Simultaneous doping of the dielectric matrix with various types of quantum dots allows for obtaining microresonators with different resonance frequencies.

The admixture of quantum dots contained in the volume of the glass matrix in combination with plasmonic nanoparticles increase the Q-factor of the WGM microresonator.

The examples given below illustrate in more detail the WGM microresonator according to the invention in specific embodiments, without limiting the scope of its application, based on the drawings, wherein:

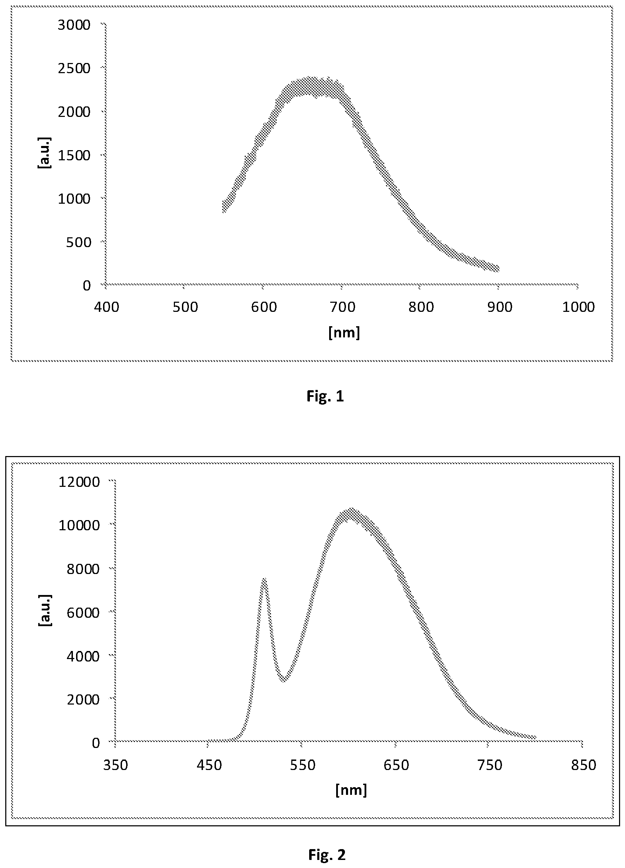

Fig.1 shows photoluminescence as a function of wavelength for a WGM microresonator doped with CdTe quantum dots only, whereas

Fig.2 shows photoluminescence as a function of wavelength for a WGM microresonator appropriately co-doped with CdTe quantum dots and silver nanoparticles. A broad emission peak in the 500-800 nm range comes from the quantum dots. The co-doping results in appearance of a very narrow peak with a maximum at 510 nm. The existence of this peak is a result of excitonic emission enhanced due to the increase in radiative recombination of excitonic states in quantum dots as a result of the interaction with an induced electromagnetic field around the Ag nanoparticles.

**Example 1**

A WGM microresonator with a spherical shape and a diameter of 30 $\mu$m, wherein the matrix is a $Na_5B_2P_3O_{13}$ glass doped with silver nanoparticles in an amount of 0.4 wt% and a diameter of 20 nm, and CdTe quantum dots with a diameter of 3 nm in an amount of 0.3 wt%. The luminescence spectrum of the WGM microresonator contains a broad band with a maximum at 590 nm, and a narrow band with a maximum at 510 nm. **Example 2**

A WGM microresonator with a spherical shape and a diameter of 30 $\mu$m, wherein the matrix is a $Na_3Al_2P_3O_{12}$ glass doped with CdTe quantum dots with a diameter of 3 nm in an amount of 0.3 wt%. The luminescence spectrum of the WGM microresonator contains a broad band with a maximum at 590 nm

**Example 3**

A WGM microresonator with a spherical shape and a diameter of 30 $\mu$m, wherein the matrix is a $Na_5B_2P_3O_{13}$ glass doped with silver nanoparticles in an amount of 0.4 wt% and a diameter of 20 nm, and CdSe/ZnS quantum dots with a diameter of 3 nm and 0.3 wt% content. The luminescence spectrum of the WGM microresonator contains an emission band in the 600 - 700 nm range with a maximum at 662 nm.

**Example 4**

A WGM microresonator with a spherical shape and a diameter of 30 $\mu$m, wherein the matrix is a glass with composition: 80mol%$TeO_2$-10mol%ZnO-10mol%$Na_2CO_3$ doped with silver nanoparticles in an amount of 0.4 wt% and a diameter of 20 nm, and CdTe quantum dots with a diameter of 3 nm in an amount of 0.3 wt%. The luminescence spectrum of the WGM microresonator contains a broad band with a maximum at 590 nm, and a narrow band with a maximum at 510 nm.

**Example 5**

A WGM microresonator with a spherical shape and a diameter of 30 $\mu$m, wherein the matrix is a glass with composition $80TeO_2$-$10ZnO$-$10Na_2CO_3$ doped with $CsPbBr_3$ perovskite quantum dots with a diameter of 10 nm in an amount 0.3 wt%. The luminescence spectrum of the WGM microresonator contains a narrow band with a maximum at 513 nm.

**Claims**

1. A WGM microresonator comprising a dielectric matrix, **characterized in that** in the dielectric matrix with positive real part of the electric permittivity $Re(\varepsilon)>0$ in the UV/VIS/NIR wavelength range of electromagnetic radiation and with low dielectric losses it comprises at least one type of plasmonic nanoparticles with negative real part of the electric permittivity $Re(\varepsilon)<0$ in the UV/VIS/NIR wavelength range of electromagnetic radiation and at least one type of luminescent semiconductor or perovskite quantum dots, wherein the plasmonic nanoparticles have diameter of 10 to 50 nm, and wherein diameter of quantum dots is from 1 to 15 nm.

2. A WGM microresonator according to claim 1, **characterized in that** it comprises a low-melting inorganic glass as a dielectric matrix.

3. A WGM microresonator according to claim 2, **characterized in that** it comprises a phosphate glass as a dielectric matrix.

4. A WGM microresonator according to claim 3, **characterized in that** the matrix is a glass with composition $Na_3Al_2P_3O_{12}$.

5. A WGM microresonator according to claim 2, **characterized in that** it comprises a glass with composition $Na_5B_2P_3O_{13}$ as a dielectric matrix.

6. A WGM microresonator according to claim 2, **characterized in that** it comprises a tellurium glass as a dielectric matrix.

7. A WGM microresonator according to claim 6, **characterized in that** it comprises a glass with composition 80 mol% $TeO_2$-$10mol\%ZnO$-$10mol\%Na_2CO_3$ as a dielectric matrix.

8. A WGM microresonator according to claim 1, **characterized in that,** as plasmonic nanoparticles in the matrix, it preferably comprises metal or semiconductor nanoparticles with low optical losses, i.e. with imaginary part of the electrical permittivity $Im(\varepsilon)<30$ F/m, and with melting temperature higher than the melting point of the matrix.

9. A WGM microresonator according to claim 8, **characterized in that** it comprises silver nanoparticles, as metal nanoparticles.

10. A WGM microresonator according to claim 1 or 2, **characterized in that** it comprises 0.1 -1 wt% metal nanoparticles in the dielectric matrix.

11. A WGM microresonator according to claim 1, **characterized in that,** as quantum dots, it comprises quantum dots of semiconductor material, of melting temperature higher than the melting temperature of the matrix.

12. A WGM microresonator according to claim 11, **characterized in that,** as quantum dots, it comprises quantum dots of CdTe and/or CdSe/ZnS material, preferably of a diameter of 1-6 nm.

13. A WGM microresonator according to claim 1, **characterized in that** it comprises 0.2 - 0.6 wt% quantum dots in the dielectric matrix.

14. A WGM microresonator according to claim 1, **characterized in that** it is spherical in shape, and the microsphere diameter is 1 - 300 micrometers.

**Patentansprüche**

1. WGM-Mikroresonator, der eine dielektrische Matrix umfasst, **dadurch gekennzeichnet, dass** er in der dielektrischen Matrix mit positivem Realteil der elektrischen Dielektrizitätskonstante $Re(\varepsilon)>0$ im UV/VIS/NIR-Wellenlängenbereich der elektromagnetischen Strahlung und mit geringen dielektrischen Verlusten mindestens eine Art von plasmonischen Nanopartikeln mit negativem Realteil der elektrischen Dielektrizitätskonstante $Re(\varepsilon)<0$ im UV/VIS/NIR-Wellenlängenbereich der elektromagnetischen Strahlung und mindestens eine Art von lumineszierenden Halbleiter- oder Perowskit-Quantenpunkten umfasst, wobei die plasmonischen Nanopartikel einen Durchmesser von 10 bis 50 nm haben, und wobei der Durchmesser der Quantenpunkte 1 bis 15 nm beträgt.

2. WGM-Mikroresonator nach Anspruch 1, **dadurch gekennzeichnet, dass** er ein niedrigschmelzendes anorganisches Glas als dielektrische Matrix umfasst.

3. WGM-Mikroresonator nach Anspruch 2, **dadurch gekennzeichnet, dass** er ein Phosphatglas als dielektrische Matrix umfasst.

4. WGM-Mikroresonator nach Anspruch 3, **dadurch gekennzeichnet, dass** die Matrix ein Glas mit der Zusammensetzung $Na_3Al_2P_3O_{12}$ ist.

5. WGM-Mikroresonator nach Anspruch 2, **dadurch gekennzeichnet, dass** er ein Glas mit der Zusammensetzung $Na_5B_2P_3O_{13}$ als dielektrische Matrix umfasst.

6. WGM-Mikroresonator nach Anspruch 2, **dadurch gekennzeichnet, dass** er ein Tellurglas als dielektrische Matrix umfasst.

7. WGM-Mikroresonator nach Anspruch 6, **dadurch gekennzeichnet, dass** er ein Glas mit der Zusammensetzung 80 mol% $TeO_2$-10mol%ZnO-10mol%$Na_2CO_3$ als dielektrische Matrix umfasst.

8. WGM-Mikroresonator nach Anspruch 1, **dadurch gekennzeichnet, dass** er als plasmonische Nanopartikel in der Matrix vorzugsweise Metall- oder Halbleiter-Nanopartikel mit geringen optischen Verlusten, d.h. mit einem Imaginärteil der elektrischen Dielektrizitätskonstante $Im(\varepsilon)<30$ F/m, und mit einer Schmelztemperatur über dem Schmelzpunkt der Matrix umfasst.

9. WGM-Mikroresonator nach Anspruch 8, **dadurch gekennzeichnet, dass** er Silber-Nanopartikel als Metall-Nanopartikel umfasst.

10. WGM-Mikroresonator nach Anspruch 1 oder 2, **dadurch gekennzeichnet, dass** er 0,1 - 1 Gew.-% Metall-Nanopartikel in der dielektrischen Matrix enthält.

11. WGM-Mikroresonator nach Anspruch 1, **dadurch gekennzeichnet, dass** er als Quantenpunkte, Quantenpunkte aus Halbleitermaterial umfasst, deren Schmelztemperatur höher ist als die Schmelztemperatur der Matrix.

12. WGM-Mikroresonator nach Anspruch 11, **dadurch gekennzeichnet, dass** er als Quantenpunkte, Quantenpunkte aus CdTe und/oder CdSe/ZnS-Material umfasst, vorzugsweise mit einem Durchmesser von 1-6 nm.

13. WGM-Mikroresonator nach Anspruch 1, **dadurch gekennzeichnet, dass** er 0,2 - 0,6 Gew.-% Quantenpunkte in der dielektrischen Matrix enthält.

14. WGM-Mikroresonator nach Anspruch 1, **dadurch gekennzeichnet, dass** er kugelförmig ist und der Durchmesser der Mikrokugeln 1 - 300 Mikrometer beträgt.

**Revendications**

1. Un microrésonateur WGM comprenant une matrice diélectrique, **caractérisé en ce que** dans la matrice diélectrique avec une partie réelle positive de la permittivité électrique $Re(\varepsilon)>0$ dans la gamme de longueurs d'onde UV/VIS/NIR du rayonnement électromagnétique et avec de faibles pertes diélectriques, il comprend au moins un type de nanoparticules plasmoniques avec une partie réelle négative de la permittivité électrique $Re(\varepsilon)<0$ dans la gamme de longueurs d'onde UV/VIS/NIR du rayonnement électromagnétique et au moins un type de semi-conducteur luminescent ou de points quantiques de pérovskite, les nanoparticules plasmoniques ont un diamètre compris entre 10 et 50 nm, et le diamètre des points quantiques est compris entre 1 et 15 nm.

2. Un microrésonateur WGM selon la revendication 1, **caractérisé en ce qu'**il comprend un verre inorganique à bas point de fusion comme matrice diélectrique.

3. Un microrésonateur WGM selon la revendication 2, **caractérisé en ce qu'**il comprend un verre phosphaté comme matrice diélectrique.

4. Un microrésonateur WGM selon la revendication 3, **caractérisé en ce que** la matrice est un verre de composition $Na_3Al_2P_3O_{12}$.

5. Un microrésonateur WGM selon la revendication 2, **caractérisé en ce qu'**il comprend un verre de composition $Na_5B_2P_3O_{13}$ comme matrice diélectrique.

6. Un microrésonateur WGM selon la revendication 2, **caractérisé en ce qu'**il comprend verre de tellure comme matrice diélectrique.

7. Un microrésonateur WGM selon la revendication 6, **caractérisé en ce qu'**il comprend un verre de composition 80 % molaire $TeO_2$-10% molaire ZnO-10% molaire $Na_2CO_3$ comme matrice diélectrique.

8. Un microrésonateur WGM selon la revendication 1, **caractérisé en ce que,** en tant que nanoparticules plasmoniques dans la matrice, il comprend de préférence des nanoparticules métalliques ou semi-conductrices à faibles pertes optiques, c'est-à-dire avec une partie imaginaire de la permittivité électrique $Im(\varepsilon)<30$ F/m, et avec une température de fusion plus élevée que le point de fusion de la matrice.

9. Un microrésonateur WGM selon la revendication 8, **caractérisé en ce qu'**il comprend des nanoparticules d'argent, comme nanoparticules métalliques.

10. Un microrésonateur WGM selon la revendication 1 ou 2, **caractérisé en ce qu'**il comprend 0,1 -1 % en poids de nanoparticules métalliques dans la matrice diélectrique.

11. Un microrésonateur WGM selon la revendication 1, **caractérisé en ce que,** comme points quantiques, il comprend des points quantiques de matériau semi-conducteur, dont la température de fusion est supérieure à la température de fusion de la matrice.

12. Un microrésonateur WGM selon la revendication 11, **caractérisé en ce que,** comme points quantiques, il comprend des points quantiques de CdTe et/ou de CdSe/ZnS, de préférence d'un diamètre de 1 à 6 nm.

13. Un microrésonateur WGM selon la revendication 1, **caractérisé en ce qu'**il comprend 0,2 - 0,6 % en poids de points quantiques dans la matrice diélectrique.

14. Un microrésonateur WGM selon la revendication 1, **caractérisé en ce qu'**il est de forme sphérique et que le diamètre des microsphères est compris entre 1 et 300 micromètres.

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. B. MATSKO ; V. S. ILCHENKO.** *IEEE J. Sel. Top. Quant. Electron.,* 2006, vol. 12, 15-32
- **A. M. ARMANI et al.** *Science,* 2007, vol. 317, 783-787
- **G. LIN. et al.** *Micro-Optics,* 2010, 771622
- **A. RASOLONIAINA et al.** *Sci. Rep.,* 2014, vol. 4, 4023
- **J. YANG ; L. J. GUO.** *IEEE J. Sel. Top. Quant. Electron.,* 2006, vol. 12, 143-147
- **S. PANG ; R. E. BECKHAM ; K. E. MEISSNER.** *Appl. Phys. Lett.,* 2008, vol. 92 (22), 221108
- **R NOWACZYNSKI et al.** Fabrication of glass microspheres doped with metallic nanoparticles and quantum dots for Whispering Gallery Mode resonators. *Molecular Plasmonics,* 18 May 2017